# EUROPÄISCHE PATENTSCHRIFT

(11) **EP 3 569 341 B1**
(45) Veröffentlichungstag und Bekanntmachung des Hinweises auf die Patenterteilung: **25.01.2023**
(21) Anmeldenummer: 19167556.0
(22) Anmeldetag: 05.04.2019
(51) Int. Cl.: B23K 9/00, B23K 9/007, B23K 9/02, B23K 9/028, B23K 9/16, B23K 11/00, B23K 11/093, B23K 11/11, B23K 26/211, B23K 26/22, B23K 26/244, B23K 26/282, B23K 35/00, B23K 35/02, B23K 101/00, B23K 101/06, B23K 103/04, B23K 103/10

(54) **FÜGEN VON WERKSTÜCKEN MIT EINEM THERMISCH EXPANDIERBAREN MATERIAL**
JOINING WORKPIECES WITH A THERMALLY EXPANDABLE MATERIAL
ASSEMBLAGE DE PIÈCES AVEC UN MATÉRIAU THERMIQUEMENT EXPANSIBLE

(30) Priorität: 05.04.2018 DE 102018108080
(43) Veröffentlichungstag der Anmeldung: 20.11.2019
(60) Teilanmeldung: 22208093.9
(73) Patentinhaber: MAN Truck & Bus SE, 80995 München (DE)
(72) Erfinder: TROITZSCH, Michel, 38440 Wolfsburg (DE); KEIL, Daniel, 30625 Hannover (DE); HARMS, Alexander, 39646 Oebisfelde (DE)
(74) Vertreter: v. Bezold & Partner Patentanwälte - PartG mbB

(56) Entgegenhaltungen:
- US-A- 4 653 469
- US-A1- 2005 115 942
- US-A1- 2008 026 247
- US-A1- 2015 000 956

## Beschreibung

Die vorliegende Erfindung betrifft ein Verfahren zum Fügen von Werkstücken, wobei in einem Zwischenraum zwischen einem ersten Werkstück und einem zweiten Werkstück ein thermisch expandierbares Material angeordnet wird, wobei zur Herstellung einer Verbindung des ersten Werkstücks mit dem zweiten Werkstück in einem Verbindungsbereich thermische Energie in einem Verbindungsverfahren in den Verbindungsbereich eingeführt wird. Ferner betrifft die vorliegende Erfindung eine Verwendung eines thermisch expandierbaren Materials in einem Verfahren zum Fügen von Werkstücken sowie ein Bauteil umfassend ein erstes Werkstück und ein zweites Werkstück und ein thermisch expandiertes Material.

### Technologischer Hintergrund

In verschiedenen Bereichen der produzierenden Industrien werden Verfahren zum Fügen von Werkstücken eingesetzt. Beispielsweise werden im Karosseriebau für Kraftfahrzeuge, insbesondere für Nutzfahrzeuge wie Omnibusse, Verfahren zum Fügen von Werkstücken eingesetzt. Die Werkstücke können Hohlprofile sein. Die Hohlprofile können direkt aneinander gefügt werden. Ferner ist es möglich, dass die Hohlprofile über Knotenelemente miteinander verbunden werden. Das Fügen von Hohlprofilen sowie von Hohlprofilen und Knotenelementen erfolgt im Stand der Technik überwiegend durch ein Metallschutzgasschweißverfahren, welches in der Regel von Hand ausgeführt wird. Dabei kann in Folge des hohen Wärmeeintrags ein Verzug des aus den Hohlprofilen beziehungsweise aus dem Hohlprofil und dem Knotenelement hergestellten Bauteils resultieren. Darüber hinaus ist das bekannte Fügeverfahren sehr zeitintensiv, und gleichbleibende Schweißnahtqualitäten sind nur schwer zu gewährleisten.

Zur Verbindung des Hohlprofils mit dem Knotenelement kann an dem Knotenelement ein Aufnahmezapfen vorgesehen sein. Dieser ermöglicht das Aufstecken und anschließende Fügen des Hohlprofils mit dem Knotenelement. Im Bereich der Aufsteckverbindung entsteht ein Überlappungsbereich, dessen Länge von der Knotenkonstruktion, insbesondere von dem Aufnahmezapfen und dem Hohlprofil, abhängig ist. Der Vorteil einer solchen Knotenkonstruktion besteht unter anderem in der Möglichkeit eines Toleranzausgleiches, welcher mit einer ausschließlich aus Hohlprofilen hergestellten Konstruktion nur aufwendig zu erzielen ist.

Im Überlappungsbereich kann es zu einer Spaltbildung zwischen dem Hohlprofil und dem Aufnahmezapfen des Knotenelements kommen. Die Spaltbildung hat negative Auswirkungen auf die Übertragbarkeit von mechanischen Kräften und auf die Korrosionsbeständigkeit aufgrund eines möglichen Eintritts von Feuchtigkeit. Um diese negativen Auswirkungen zu kompensieren, wird im Stand der Technik zumeist eine umlaufende Schweißnaht in einem Metallschutzgasschweißverfahren ausgebildet. Der Spalt in dem Überlappungsbereich bleibt jedoch hinter der Schweißnaht erhalten.

Ferner sind im Stand der Technik alternative Fügeverfahren bekannt, in denen Klebstoffe eingesetzt werden. Der Klebstoff muss jedoch vor dem Aufstecken des Hohlprofils auf den Aufnahmezapfen am Aufnahmezapfen appliziert werden. Während des Aufsteckens des Hohlprofils auf den Aufnahmezapfen kann es zu einem Verdrängen des Klebstoffs im Überlappungsbereich kommen, sodass eine umlaufende, geschlossene Verbindung nicht gewährleistet werden kann.

Eine weitere bekannte Alternative stellt das Injektionsklebeverfahren dar. In diesem Verfahren wird über ein Loch in dem Hohlprofil oder in dem Knotenelement ein Klebstoff mit Druck in den Überlappungsbereich eingespritzt und anschließend thermisch ausgehärtet. Um zu verhindern, dass der Klebstoff austritt, muss der Überlappungsbereich abgedichtet werden.

Aus der US 2015/0352658 A1 ist ein Widerstandspunktschweißverfahren zur Verbesserung von Aluminium-Stahl-Schweißverbindungen bekannt. In das Aluminiumbauteil wird eine Aussparung eingebracht, durch welche die Stromdichte und die Strömungsrichtung des elektrischen Stroms im Widerstandspunktschweißverfahren beeinflusst wird. Hierdurch kann die Schweißverbindung verbessert werden.

Die US 2016/0243643 A1 offenbart ein Schweißhilfsmittel für ein Punktschweißverfahren. Das Schweißhilfsmittel ist als eine Scheibe ausgebildet und umfasst einen aus einem elektrisch leitfähigen Material gebildeten Hauptkörper, wobei das elektrisch leitfähige Material das gleiche Material ist, aus dem auch die Fügepartner bestehen. Umlaufend um den Rand des Hauptkörpers ist eine Schaumkomponente aus einem synthetischen Kunststoffschaum angeordnet, welcher thermisch und elektrisch isolierende Eigenschaften aufweist.

Die US 2005/115942 A1 (welche die Basis für den Oberbegriff von Anspruch 1 darstellt) offenbart ein Verfahren zum Verbinden eines Paares sich überlappender Werkstücke, wobei das Verfahren folgende Schritte umfasst: Einfügen eines Füllmaterials zwischen dem Paar sich überlappender Werkstücke; Anlegen eines Drucks auf mindestens eines der Werkstücke, sodass das Füllmaterial zerdrückt wird; und Zusammenfügen der beiden Werkstücke in einem Bereich, der durch das Füllmaterial definiert ist.

Die US 2015/000956 A1 offenbart ein Verfahren zum Befestigen eines Stapels mit mehreren Schichten verschiedener Materialien, beispielsweise eine Aluminiumschicht zwischen zwei Stahlschichten. Wärme des Schweißgeräts erweicht die Aluminiumschicht, welches einen niedrigeren Schmelzpunkt aufweist, wodurch eine Vertiefung einer Stahlschicht in die Aluminiumschicht eindringen und mit der gegenüberliegenden Stahlschicht verschweißen kann.

Die US 4 653 469 A offenbart ein vakuum-wärmeisoliertes Kochutensil und ein Verfahren zu dessen Herstellung, wobei das Kochutensil einen Innen- und einen Außenbehälter aufweist, deren jeweiligen Böden durch ein erstes Lötmaterial miteinander in Kontakt stehen. Ein zweites Lötmaterial mit einem Schmelzpunkt, der höher als der des ersten Lötmaterials ist, ist am Vakuumversiegelungsabschnitt positioniert.

Die US 2008/026247 A1 offenbart ein Verfahren zum Verbinden unterschiedlicher Metalle. Das Verfahren umfasst das Überlappen von zwei Materialien aus unterschiedlichen Metallen mit einem dazwischenliegenden Dichtungsmaterial, das Abführen des Dichtungsmaterials von einer Verbindungsgrenzfläche und das Verbinden der beiden Materialien in direktem Kontakt miteinander.

### Darstellung der Erfindung: Aufgabe, Lösung, Vorteile

Der vorliegenden Erfindung liegt die Aufgabe zugrunde, ein Verfahren zum Fügen von Werkstücken bereitzustellen, bei dem die Übertragbarkeit von mechanischen Kräften und die Korrosionsbeständigkeit verbessert wird und welches automatisierbar, hoch reproduzierbar und einfach durchzuführen ist.

Zur Lösung der der Erfindung zugrundeliegenden Aufgabe wird ein Verfahren zum Fügen von Werkstücken gemäß Anspruch 1 vorgeschlagen.

Das erste und das zweite Werkstück werden dabei bevorzugt aneinander angeordnet, so dass ein Überlappungsbereich entsteht. In dem Zwischenraum zwischen dem ersten Werkstück und dem zweiten Werkstück im Überlappungsbereich wird das thermisch expandierbare Material angeordnet. Insbesondere ist die Anordnung von erstem Werkstück und zweitem Werkstück mit dem dazwischen angeordneten thermisch expandierenden Material im Überlappungsbereich sandwichartig ausgebildet. Das thermisch expandierbare Material und/oder das nach Durchführung des Verfahrens thermisch expandierte Material kann den Überlappungsbereich vollständig oder teilweise ausfüllen.

Im Überlappungsbereich bzw. in einem Teilbereich des Überlappungsbereichs wird die Verbindung zwischen dem ersten Werkstück und dem zweiten Werkstück hergestellt. Dieser Bereich wird als Verbindungsbereich bezeichnet. Besonders vorteilhaft an dem erfindungsgemäßen Verfahren ist, dass das thermisch expandierbare Material in dem Verbindungsbereich aufgrund der in den Verbindungsbereich eingeführten thermischen Energie schmilzt oder aufschmilzt. Durch das Aufschmelzen des thermisch expandierbaren Materials im Verbindungsbereich kann eine Verbindung zwischen dem ersten Werkstück und dem zweiten Werkstück hergestellt werden. Die Verbindung zwischen dem ersten Werkstück und dem zweiten Werkstück kann eine stoffschlüssige und/oder formschlüssige Verbindung sein. Beispielsweise kann das in dem Verbindungsbereich aufgeschmolzene thermisch expandierbare Material aus dem Verbindungsbereich verdrängt werden, sodass das erste Werkstück und das zweite Werkstück miteinander in einen physischen Kontakt kommen und miteinander verbunden werden. Auch ist es möglich, dass die Verbindung zwischen dem ersten Werkstück und dem zweiten Werkstück durch das aufgeschmolzene und anschließend wieder ausgehärtete thermisch expandierbare Material in dem Verbindungsbereich gebildet wird. Das wieder ausgehärtete thermisch expandierbare Material kann im Verbindungsbereich sowohl eine stoffschlüssige und/oder formschlüssige Verbindung mit dem ersten Werkstück sowie eine stoffschlüssige und/oder formschlüssige Verbindung mit dem zweiten Werkstück eingehen. Bevorzugt ist jedoch vorgesehen, dass für die form- und/oder stoffschlüssige Verbindung das erste Werkstück und das zweite Werkstück in einem direkten physischen Kontakt stehen, wobei das thermisch expandierbare Material aus dem Verbindungsbereich verdrängt wird.

Ein weiterer besonderer Vorteil an dem erfindungsgemäßen Verfahren ist, dass das thermisch expandierbare Material in einem an den Verbindungsbereich angrenzenden Expansionsbereich expandiert, sodass das thermisch expandierte Material den Zwischenraum zwischen dem ersten Werkstück und dem zweiten Werkstück im Expansionsbereich im Wesentlichen vollständig ausfüllt. Bevorzugt umfasst der Überlappungsbereich den Verbindungsbereich und den Expansionsbereich, so dass der Verbindungsbereich und der Expansionsbereich im Überlappungsbereich liegen. Der an den Verbindungsbereich angrenzende Expansionsbereich kann dabei den Verbindungsbereich vollständig, insbesondere ringförmig, umgeben. Insbesondere ist der Expansionsbereich ein Bereich im Zwischenraum zwischen dem ersten Werkstück und dem zweiten Werkstück, welcher durch das thermisch expandierbare Material ausgefüllt wird, in dem jedoch nicht die Verbindung zwischen dem ersten Werkstück und dem zweiten Werkstück hergestellt wird. Das thermisch expandierte Material füllt den Zwischenraum zwischen dem ersten und dem zweiten Werkstück im Expansionsbereich im Wesentlichen vollständig aus. Hierdurch wird mit Vorteil eine Spaltbildung im Überlappungsbereich verhindert, so dass keine Feuchtigkeit in den Zwischenraum zwischen dem ersten Werkstück und dem zweiten Werkstück, bzw. in den Überlappungsbereich, eindringen kann. Durch diese Maßnahme wird die Korrosionsbeständigkeit erhöht. Ferner führt das Ausfüllen des Zwischenraums mit dem thermisch expandierten Material im Expansionsbereich zu einer besseren mechanischen Kraftübertragung zwischen dem ersten Werkstück und dem zweiten Werkstück.

Da sowohl das Aufschmelzen des thermisch expandierbaren Materials im Verbindungsbereich als auch das Expandieren des thermisch expandierbaren Materials in dem Expansionsbereich durch den Eintrag der thermischen Energie in den Verbindungsbereich erzeugt wird, ist das Verfahren zum Fügen von Werkstücken besonders einfach auszuführen und insbesondere einfach automatisierbar und hochreproduzierbar.

Erfindungsgemäß ist vorgesehen, dass das thermisch expandierbare Material ein thermisch aufschäumbares Material ist, wobei das thermisch aufschäumbare Material in dem Expansionsbereich aufgeschäumt wird.

Vorteilhaft an der Verwendung eines thermisch aufschäumbaren Materials ist, dass ein aufschäumbares Material beim Erkalten seine Form behält und insbesondere nicht wieder kontrahiert. Hierdurch werden Spannungen in den gefügten Werkstücken beziehungsweise in dem Verbindungsbereich und dem Expansionsbereich vermieden. Ein weiterer Vorteil der Verwendung eines aufschäumbaren Materials besteht darin, dass dieses gegenüber nicht aufschäumbaren Materialien eine geringere Dichte und somit ein geringeres Gewicht aufweist.

Weiter bevorzugt kann vorgesehen sein, dass das erste Werkstück und/oder das zweite Werkstück ein metallisches Material, insbesondere Stahl, umfassen, und/oder dass das erste Werkstück und/oder das zweite Werkstück aus einem metallischen Material, insbesondere Stahl, bestehen.

Das Verfahren zum Fügen von Werkstücken eignet sich besonders für das Fügen von Werkstücken aus metallischen Materialien, insbesondere Stahl. Insbesondere im Karosseriebau für Kraftfahrzeug wie Nutzfahrzeuge, beispielsweise Omnibusse, werden Karosserieteile aus einem metallischen Material, insbesondere Stahl, gefertigt.

Mit weiterem Vorteil kann vorgesehen sein, dass die Verbindung eine Schweißverbindung ist, und/oder dass in dem Verbindungsbereich eine Schweißnaht und/oder ein Schweißpunkt ausgebildet wird, und/oder dass das Verbindungsverfahren ein Schweißverfahren ist, wobei das Schweißverfahren bevorzugt ein Widerstandspunktschweißverfahren und/oder ein Metallschutzgasschweißverfahren und/oder ein Laserschweißverfahren und/oder ein Metallschutzgaslochschweißverfahren ist.

In dem Verbindungsbereich kann eine Schweißnaht und/oder ein Schweißpunkt ausgebildet werden. Mit anderen Worten ist der Verbindungsbereich der Bereich des Zwischenraums oder des Überlappungsbereichs, in dem die Schweißnaht oder ein Schweißpunkt gesetzt werden soll beziehungsweise in dem nach der Durchführung des Verfahrens eine Schweißnaht oder ein Schweißpunkt vorliegt. Mit besonderem Vorteil ist das Schweißverfahren ein Widerstandspunktschweißverfahren. Ein Widerstandspunktschweißverfahren zeichnet sich durch eine vergleichsweise einfache Automatisierbarkeit, hohe Reproduzierbarkeit und zugleich geringere Qualifikationsanforderungen an den Bediener aus. Zudem ermöglicht ein Widerstandspunktschweißverfahren die Reduzierung des Wärmeeintrags in das erste Werkstück und/oder das zweite Werkstück und reduziert somit den Verzug der Konstruktion aus dem gefügten ersten Werkstück und dem zweiten Werkstück. Ein weiterer Vorteil gegenüber einem Metallschutzgasschweißprozess ist der Verzicht auf Schweißzusatzwerkstoffe, da die Fügepartner beziehungsweise das erste Werkstück und das zweite Werkstück im Widerstandspunktschweißverfahren lokal, das heißt im Verbindungsbereich aufgeschmolzen und verbunden werden. Ebenso entfällt der Einsatz von Schutzgas beim Widerstandspunktschweißverfahren. Dies führt dazu, dass sich die Kosten des Verfahrens zum Fügen von Werkstücken senken lassen und zugleich der Einfluss von Schweißzusatzwerkstoffen auf die Schweißnahtausbildung oder auf die Schweißpunktausbildung reduziert wird. Weiterhin entfällt bei der Anwendung eines Widerstandspunktschweißverfahrens die Nacharbeit, da keine Schweißnahtüberhöhung wie bei einem Metallschutzgasschweißverfahren auftritt. Bevorzugt muss zur Übertragung der Kräfte, welche auf die Konstruktion aus dem ersten Werkstück und dem zweiten Werkstück einwirken, eine entsprechende Anzahl von Schweißpunkten oder Schweißnähten gesetzt werden.

Weiter vorteilhaft an der Ausgestaltung des Verbindungsverfahrens als Widerstandspunktschweißverfahren ist, dass die Temperaturführung und somit die eingebrachte thermische Energie über die Prozessparameter geregelt werden kann. So können die Temperatur sowie die Haltezeit eingestellt werden, um ein optimales Aufschäumen oder eine optimale Expansion des thermisch expandierbaren Materials sicherzustellen.

Mit weiterem Vorteil kann vorgesehen sein, dass das thermisch expandierbare Material ein elektrisch leitfähiges Material und/oder ein thermisch leitfähiges Material ist.

Eine Ausgestaltung des thermisch expandierbaren Materials als ein elektrisch leitfähiges Material ist besonders zusammen mit der Verwendung eines Widerstandspunktschweißverfahrens vorteilhaft. Durch das elektrisch leitfähige Material kann ein Strom von einer an einer Außenseite des ersten Werkstücks anliegenden Elektrode zu einer an einer Außenseite des zweiten Werkstücks anliegenden Elektrode durch den Verbindungsbereich und den darin angeordneten Teil des thermisch expandierbaren Materials geleitet werden, sodass eine hohe Wärmeentwicklung entsteht, mit welcher das thermisch expandierbare Material im Verbindungsbereich aufgeschmolzen wird. Die Wärmeentwicklung durch den elektrischen Strom führt zudem zu einem Aufschmelzen des ersten Werkstücks und/oder des zweiten Werkstücks im Verbindungsbereich, sodass es zu einer stoffschlüssigen und/oder formschlüssigen Verbindung von erstem Werkstück und zweitem Werkstück kommt. Gegebenenfalls erfolgt die stoffschlüssige und/oder formschlüssige Verbindung über das aufgeschmolzene und danach erstarrte thermisch expandierbare Material. Bevorzugt wird jedoch das aufgeschmolzene thermisch expandierbare Material aus dem Verbindungsbereich gedrängt, und die stoffschlüssige und/oder formschlüssige Verbindung findet direkt zwischen dem ersten Werkstück und dem zweiten Werkstück statt.

Der Vorteil der Ausbildung des thermisch expandierbaren Materials als ein thermisch leitfähiges Material besteht darin, dass die in den Verbindungsbereich und in das thermisch expandierbare Material eingetragene Wärme schnell und effektiv in den Expansionsbereich beziehungsweise den Anteil des thermisch expandierbares Materials, welcher im Expansionsbereich angeordnet ist, geleitet wird, sodass das thermisch expandierbare Material in dem Expansionsbereich bereits nach kurzer Zeit aufschäumt. Hierdurch kann der notwendige Wärmeintrag und ein Verzug der Konstruktion aus erstem Werkstück und zweitem Werkstück verringert werden.

Mit weiterem Vorteil kann vorgesehen sein, dass das thermisch expandierbare Material ein aufschäumbarer Kunststoff und/oder ein aufschäumbares Metall, insbesondere ein Metallschaum, weiter insbesondere ein Zinkschaum oder ein Aluminiumschaum, ist.

Aufschäumbare Metallschäume beziehungsweise aufschäumbare Metalle sind elektrisch leitfähig und weisen zudem eine gute thermische Leitfähigkeit auf.

Besonders bevorzugt ist der Metallschaum als Zinkschaum oder Aluminiumschaum ausgebildet. Die Verwendung eines Zinkschaums ist insbesondere vorteilhaft, wenn das erste Werkstück und/oder das zweite Werkstück aus einem metallischen Material, insbesondere Stahl, bestehen, da die Materialkombination Metall beziehungsweise Stahl und Zink hinsichtlich der Korrosionseigenschaften unkritisch ist. Durch die Verwendung von Zinkschaum wird somit die Korrosionsbeständigkeit erhöht.

Neben oder anstatt eines Zinkschaums kann auch ein Aluminiumschaum eingesetzt werden. Jedoch benötigt ein Aluminiumschaum eine höhere Temperatur zur Expansion oder zum Aufschäumen. Zudem ist die Verbindung von Stahl und Aluminiumschäumen hinsichtlich der Korrosionsbeständigkeit kritischer als die Kombination Stahl und Zinkschaum.

Mit weiterem Vorteil kann vorgesehen sein, dass das aufgeschmolzene thermisch expandierbare Material aus dem Verbindungsbereich, bevorzugt durch Beaufschlagung des ersten Werkstücks und/oder des zweite Werkstücks mit einer Druckkraft, verdrängt wird, sodass das erste Werkstück und das zweite Werkstück in einen physischen Kontakt kommen und eine stoffschlüssige und/oder formschlüssige Verbindung zwischen dem ersten Werkstück und dem zweiten Werkstück hergestellt wird.

Durch das Verdrängen des aufgeschmolzenen thermisch expandierbaren Materials aus dem Verbindungsbereich kommen das erste Werkstück und das zweite Werkstück in einen physischen Kontakt und können miteinander direkt verbunden, insbesondere verschweißt werden. In dieser bevorzugten Ausführungsform befindet sich im Verbindungsbereich zwischen dem ersten Werkstück und dem zweiten Werkstück nach der Durchführung des Verfahrens kein oder nur wenig des thermisch expandierbaren Materials. Bevorzugt wird die Verbindung zwischen dem ersten Werkstück und dem zweiten Werkstück im Wesentlichen durch Aufschmelzen des Materials des ersten Werkstücks und des Materials des zweiten Werkstücks und eine daraus entstehende stoffschlüssige Verbindung hergestellt.

Die Druckkraft zur Verdrängung des thermisch expandierbaren Materials aus dem Verbindungsbereich wird dabei bevorzugt durch die im Verbindungsverfahren verwendeten Vorrichtungen erzeugt. Beispielsweise kann durch die Elektroden im Widerstandspunktschweißverfahren ein beidseitiger Druck auf die im Überlappungsbereich übereinander bzw. aneinander angeordneten Werkstücke ausgeübt werden. Dadurch wird das aufgeschmolzene thermisch expandierbare Material im Verbindungsbereich, welcher von den Elektroden mit Druck beaufschlagt wird, aus dem Verbindungsbereich herausgedrängt, sodass eine stoffschlüssige und direkte Verbindung, insbesondere eine Schweißnaht oder ein Schweißpunkt, zwischen dem ersten Werkstück und dem zweiten Werkstück hergestellt werden kann.

Mit weiterem Vorteil kann vorgesehen sein, dass eine dem zweiten Werkstück und/oder dem thermisch expandierbaren Material zugewandte Seite des ersten Werkstücks, und/oder dass eine dem ersten Werkstück und/oder dem thermisch expandierbaren Material zugewandte Seite des zweiten Werkstücks, insbesondere in dem Überlappungsbereich, weiter insbesondere in dem Verbindungsbereich und/oder dem Expansionsbereich, Ausnehmungen, insbesondere Rillen, Furchen, Durchbrüche oder ähnliches, und/oder Vorsprünge aufweist.

Bei der Expansion des thermisch expandierbaren Materials in dem Expansionsbereich kann das expandierte Material in die Ausnehmungen und/oder Vorsprünge der jeweiligen dem thermisch expandierbaren Material zugewandten Seite des ersten Werkstücks und/oder des zweiten Werkstücks eingreifen. Somit wird neben einer stoffschlüssigen Verbindung insbesondere im Expansionsbereich zwischen dem ersten Werkstück und dem zweiten Werkstück eine formschlüssige Verbindung zwischen dem thermisch expandierten Material sowie dem ersten Werkstück und dem zweiten Werkstück hergestellt. Es kann somit eine bessere Übertragbarkeit von mechanischen Kräften gewährleistet werden.

Mit besonderem Vorteil kann vorgesehen sein, dass das erste Werkstück ein Hohlprofil ist und/oder dass das zweite Werkstück ein Knotenelement ist, wobei das Hohlprofil auf einen Aufnahmezapfen des Knotenelements aufgesteckt wird.

Durch die Ausbildung des Werkstücks als Hohlprofil und/oder des zweiten Werkstücks als Knotenelement können, insbesondere im Karosseriebau für Kraftfahrzeuge, Fertigtoleranzen ausgeglichen werden.

Mit weiterem Vorteil kann vorgesehen sein, dass das thermisch expandierbare Material ein Materialplättchen ist.

Ein Materialplättchen aus thermisch expandierbarem Material eignet sich besonders gut dazu, in den Zwischenraum zwischen dem ersten Werkstück und dem zweiten Werkstück angeordnet zu werden. Ferner ist ein als ein Materialplättchen ausgebildetes thermisch expandierbares Material einfacher zu handhaben.

Mit weiterem Vorteil kann vorgesehen sein, dass das thermisch expandierbare Material auf das erste Werkstück und/oder das zweite Werkstück aufgebracht, insbesondere gelegt und/oder geklebt und/oder gespritzt, wird, und/oder dass das thermisch expandierbare Material in den Zwischenraum zwischen dem ersten Werkstück und dem zweiten Werkstück eingebracht, insbesondere eingelegt und/oder eingeklebt und/oder eingespritzt, wird.

Dabei kann das thermisch expandierbare Material vor dem Anordnen des ersten Werkstücks an dem zweiten Werkstück auf das erste Werkstück und/oder das zweite Werkstück aufgebracht werden. Jedoch ist es auch möglich, dass das thermisch expandierbare Material erst in den Zwischenraum zwischen dem ersten Werkstück und dem zweiten Werkstück eingebracht wird, wenn diese bereits aneinander angeordnet sind. Insbesondere im Falle einer Ausbildung des ersten Werkstücks als Hohlprofil und des zweiten Werkstücks als Knotenelement mit Aufnahmezapfen kann es vorteilhaft sein, wenn das thermisch expandierbare Material in den Zwischenraum zwischen dem ersten Werkstück und dem zweiten Werkstück eingeklebt oder eingespritzt wird.

Gegenüber einem Injektionsklebeverfahren ist es von Vorteil, dass das thermisch expandierbare Material im Vergleich zu einem Klebstoff nicht aus dem Überlappungsbereich, beziehungsweise aus dem Verbindungsbereich und/oder dem Expansionsbereich, weiter insbesondere aus dem Zwischenraum, zwischen dem ersten Werkstück und dem zweiten Werkstück heraustreten kann. Es kann daher darauf verzichtet werden, den Überlappungsbereich, insbesondere den Expansionsbereich und/oder den Verbindungsbereich, abzudichten. Auf die Verwendung von Dichtbändern kann verzichtet werden. Zudem ist eine zusätzliche Temperaturzuführung zur Aushärtung des Klebstoffs nicht erforderlich.

Das thermisch expandierbare Material weist erfindungsgemäß ein Treibmittel auf.

Insbesondere bei Metallschäumen sind Treibmittel in der Zusammensetzung des thermisch expandierbaren Materials vorgesehen.

Ein mögliches Treibmittel ist zum Beispiel Titanoxid. Wird das thermisch expandierbare Material erhitzt, so setzt das Treibmittel ein Gas, insbesondere Sauerstoff frei, welches dafür sorgt, dass das thermisch expandierbare Material expandiert oder aufschäumt.

Mit weiterem Vorteil kann vorgesehen sein, dass das thermisch expandierbare Material eine tiefere Schmelztemperatur als das erste Werkstück und/oder das zweite Werkstück aufweist.

Durch das Vorsehen einer Schmelztemperatur für das thermisch expandierbare Material, welche tiefer ist als die des ersten Werkstücks und/oder des zweiten Werkstücks, kann sichergestellt werden, dass das Aufschmelzen des thermisch expandierbaren Materials im Verbindungsbereich eintritt, bevor das erste Werkstück oder das zweite Werkstück aufschmilzt. Hierdurch kann sichergestellt werden, dass das thermisch expandierbare Material insbesondere aus dem Verbindungsbereich herausgedrängt werden kann, bevor das erste Werkstück und/oder das zweite Werkstück im Verbindungsbereich schmilzt. Dementsprechend können das erste Werkstück und das zweite Werkstück im Verbindungsbereich in einen physischen Kontakt gebracht werden, sodass eine insbesondere stoff- oder formschlüssige Verbindung zwischen dem ersten und dem zweiten Werkstück hergestellt wird.

Eine weitere Lösung der der Erfindung zugrundeliegenden Aufgabe besteht in einer Verwendung eines thermisch expandierbaren Materials, insbesondere eines thermisch aufschäumbaren Materials, in einem vorbeschriebenen Verfahren zum Fügen von Werkstücken.

Eine noch weitere Lösung der der Erfindung zugrundeliegenden Aufgabe besteht in der Bereitstellung eines Bauteils umfassend ein erstes Werkstück und ein zweites Werkstück und ein thermisch expandiertes Material, welches durch ein vorbeschriebenes Verfahren zum Fügen von Werkstücken erhältlich ist.

Mit besonderem Vorteil kann das Bauteil ein Karosseriebauteil sein, insbesondere für ein Kraftfahrzeug, wobei bevorzugt das erste Werkstück ein Hohlprofil ist und wobei das zweite Werkstück ein Knotenelement mit einem Aufnahmezapfen ist.

Die für das Verfahren beschriebenen Merkmale und Vorteile sind in entsprechender Weise auf die erfindungsgemäße Verwendung eines thermisch expandierbaren Materials und auf das erfindungsgemäße Bauteil übertragbar.

### Kurze Beschreibung der Figuren

Die Erfindung wird nachstehend näher anhand der Figuren erläutert. Es zeigen
- Fig. 1: ein Bauteil umfassend ein erstes Werkstück, ein zweites Werkstück und ein thermisch expandierbares Material vor der Durchführung eines Verfahrens zum Fügen von Werkstücken,
- Fig. 2: eine perspektivische Ansicht eines Bauteils mit einem ersten Werkstück und einem zweiten Werkstück in einem Widerstandspunktschweißverfahren,
- Fig. 3: ein Bauteil umfassend ein erstes Werkstück, ein zweites Werkstück und ein thermisch expandiertes Material nach der Durchführung eines Verfahrens zum Fügen von Werkstücken, und
- Fig. 4: ein Ablaufdiagramm eines Verfahrens zum Fügen von Werkstücken.

### Ausführliche Beschreibung der Figuren

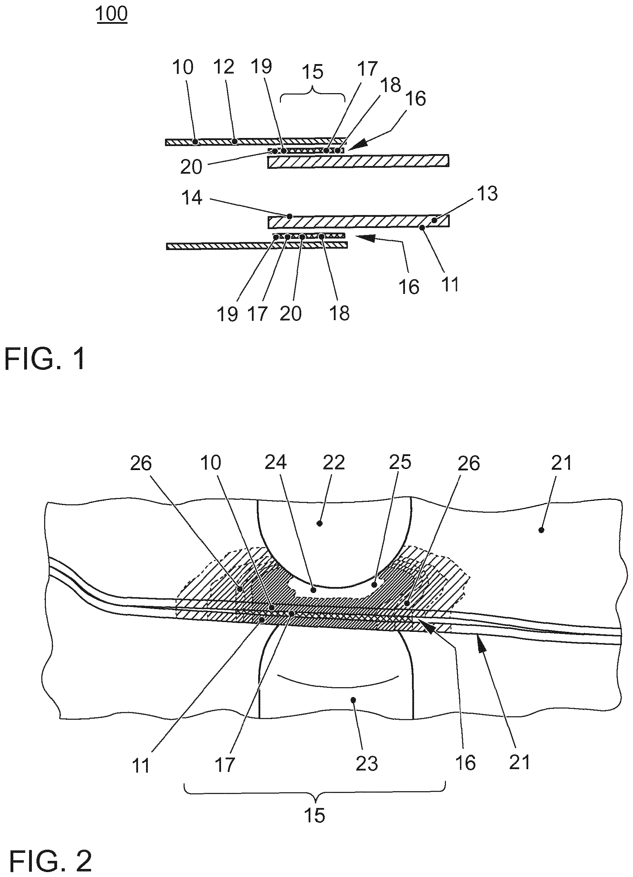

Fig. 1 zeigt ein Bauteil 100 umfassend ein erstes Werkstück 10 und ein zweites Werkstück 11. Das erste Werkstück 10 ist als Hohlprofil 12 ausgebildet. Das zweite Werkstück 11 ist als Knotenelement 13 mit einem Aufnahmezapfen 14 ausgebildet. Das Hohlprofil 12 ist auf den Aufnahmezapfen 14 des Knotenelementes 13 aufgeschoben, sodass das Hohlprofil 12 und das Knotenelement 13 in einem Überlappungsbereich 15 überlappend aneinander angeordnet sind. Im Überlappungsbereich 15 ist zwischen dem ersten Werkstück 10 und dem zweiten Werkstück 11 ein Zwischenraum 16 ausgebildet, in dem ein thermisch expandierbares Material 17 angeordnet ist. Das thermisch expandierbare Material 17 ist als Materialplättchen 18 ausgebildet. Ferner ist das thermisch expandierbare Material 17 als elektrisch leitfähiges und thermisch leitfähiges Material ausgebildet. Besonders geeignet ist ein als Metallschaum 19 ausgebildetes thermisch expandierbares Material 17, wobei der Metallschaum 19 weiter bevorzugt ein Zinkschaum 20 ist.

Fig. 2 zeigt eine perspektivische Ansicht eines ersten Werkstücks 10 mit einem zweiten Werkstück 11, wobei in einem Zwischenraum 16 zwischen dem ersten Werkstück 10 und dem zweiten Werkstück 11 ein thermisch expandierbares Material 17 angeordnet ist. Auf der Außenseite 21 des ersten Werkstücks 10 und des zweiten Werkstücks 11 sind eine erste Elektrode 22 und eine zweite Elektrode 23 einer nicht weiter dargestellten Vorrichtung für ein Widerstandspunktschweißverfahren in Kontakt mit den Außenseiten 21 angeordnet.

Durch Anlegen einer Hochspannung an die erste Elektrode 22 und an die zweite Elektrode 23 fließt ein Strom durch das elektrisch leitfähige erste Werkstück 10 und das elektrisch leitfähige thermisch expandierbare Material 17 sowie das zweite Werkstück 11 zu der zweiten Elektrode 23, wodurch thermische Energie in einen Verbindungsbereich 24 eingeleitet wird. Im Verbindungsbereich 24 wird in der dargestellten Ausführungsform mit einem Widerstandspunktschweißverfahren ein Schweißpunkt 25 ausgebildet.

Durch die Einführung der thermischen Energie in den Verbindungsbereich 24 schmilzt das darin angeordnete thermisch expandierbare Material 17 auf. Durch Druckausübung auf den Verbindungsbereich 24 mit der ersten Elektrode 22 und der zweiten Elektrode 23 kann das aufgeschmolzene thermisch expandierbare Material 17 aus dem Verbindungsbereich 24 herausgedrängt werden, sodass das erste Werkstück 10 und das zweite Werkstück 11 in physischen Kontakt miteinander kommen und im Widerstandspunktschweißverfahren aufgeschmolzen werden, sodass nach Erhärten des ersten Werkstücks 10 und des zweiten Werkstücks 11 im Verbindungsbereich 24 eine stoffschlüssige Verbindung zwischen dem ersten Werkstück 10 und dem zweiten Werkstück 11 hergestellt wird.

Das thermisch expandierbare Material 17 ist thermisch leitend ausgebildet, sodass thermische Energie aus dem Verbindungsbereich 24 in einen an den Verbindungsbereich 24 angrenzenden Expansionsbereich 26 fließen kann. Verbindungsbereich 24 und Expansionsbereich 26 liegen im Überlappungsbereich 15.

Die in den Expansionsbereich 26 eingeführte thermische Energie führt dazu, dass ein Treibmittel in dem thermisch expandierbaren Material 17 ausgast und dafür sorgt, dass das thermisch expandierbare Material 17 aufgeschäumt wird. Durch das Aufschäumen des thermisch expandierbaren Materials 17 wird der Zwischenraum 16 zwischen dem ersten Werkstück 10 und dem zweiten Werkstück 11 im Wesentlichen vollständig mit dem aufgeschäumten thermisch expandierbaren Material 17 ausgefüllt.

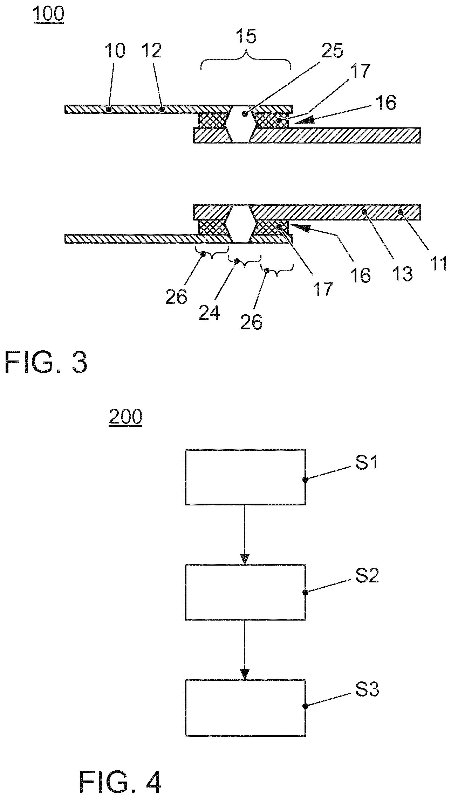

Fig. 3 zeigt ein Bauteil 100 umfassend ein erstes Werkstück 10 und ein zweites Werkstück 11 nach der Durchführung eines Verfahrens zum Fügen von Werkstücken mit einem thermisch expandierbaren Material 17. Aus dem Verbindungsbereich 24 wurde das aufgeschmolzene thermisch expandierbare Material 17 herausgedrängt. Im Verbindungsbereich 24 wurden zudem das erste Werkstück 10 und das zweite Werkstück 11 beziehungsweise das Material dieser Werkstücke 10, 11 aufgeschmolzen, sodass es zu einer direkten stoffschlüssigen Verbindung zwischen dem ersten Werkstück 10 und dem zweiten Werkstück 11 in einem Schweißpunkt 25 gekommen ist, nachdem das Material wieder ausgehärtet ist. In dem Expansionsbereich 26, in welchen die thermische Energie von dem Verbindungsbereich 24 aufgrund der thermischen Leitfähigkeit des thermisch expandierbaren Materials 17 geleitet wurde, ist das thermisch expandierbare Material 17 aufgeschäumt und füllt im Wesentlichen den gesamten Zwischenraum 16 zwischen dem ersten Werkstück 10 und dem zweiten Werkstück 11 aus. Wie deutlich ersichtlich ist, besteht im Überlappungsbereich 15 kein Spalt mehr zwischen dem ersten Werkstück 10 und dem zweiten Werkstück 11, sodass keine Feuchtigkeit in den Zwischenraum 16 mehr eindringen kann und die Korrosionsbeständigkeit verbessert wird.

Fig. 4 zeigt ein Ablaufdiagramm für ein Verfahren 200 zum Fügen von Werkstücken 10, 11. In einem ersten Verfahrensschritt S1 wird in einem Zwischenraum 16 zwischen einem ersten Werkstück 10 und einem zweiten Werkstück 11 ein thermisch expandierbares Material 17 angeordnet. In einem zweiten Verfahrensschritt S2 wird zur Herstellung einer Verbindung des Werkstücks 10 mit dem zweiten Werkstück 11 in einem Verbindungsbereich 24 thermische Energie in einem Verbindungsverfahren in den Verbindungsbereich 24 eingeführt. In einem dritten Verfahrensschritt S3 schmilzt das thermisch expandierbare Material 17 in dem Verbindungsbereich 24 auf, sodass in dem Verbindungsbereich 24 eine Verbindung des ersten Werkstücks 10 und des zweiten Werkstücks 11 hergestellt wird, und gleichzeitig expandiert das thermisch expandierbare Material 17 in dem Verfahrensschritt S3 in einem an den Verbindungsbereich 24 angrenzenden Expansionsbereich 26, sodass das thermisch expandierbare Material 17 den Zwischenraum 16 zwischen dem ersten Werkstück 10 und dem zweiten Werkstück 11 im Wesentlichen vollständig ausfüllt.

### Bezugszeichenliste

- 100: Bauteil
- 10: Erstes Werkstück
- 11: Zweites Werkstück
- 12: Hohlprofil
- 13: Knotenelement
- 14: Aufnahmezapfen
- 15: Überlappungsbereich
- 16: Zwischenraum
- 17: Thermisch expandierbares Material
- 18: Materialplättchen
- 19: Metallschaum
- 20: Zinkschaum
- 21: Außenseiten
- 22: Elektrode
- 23: Zweite Elektrode
- 24: Verbindungsbereich
- 25: Schweißpunkt
- 26: Expansionsbereich

- S1: Verfahrensschritt
- S2: Verfahrensschritt
- S3: Verfahrensschritt

## Patentansprüche

1. Verfahren (200) zum Fügen von Werkstücken (10, 11), wobei in einem Zwischenraum (16) zwischen einem ersten Werkstück (10) und einem zweiten Werkstück (11) ein thermisch expandierbares Material (17) angeordnet wird, wobei zur Herstellung einer Verbindung des ersten Werkstücks (10) mit dem zweiten Werkstück (11) in einem Verbindungsbereich (24) thermische Energie in einem Verbindungsverfahren in den Verbindungsbereich (24) eingeführt wird, wobei
das thermisch expandierbare Material (17) in dem Verbindungsbereich (24) aufschmilzt, so dass in dem Verbindungsbereich (24) eine Verbindung des ersten Werkstücks (10) und des zweiten Werkstücks (11) hergestellt wird, und dass das thermisch expandierbare Material (17) in einem an dem Verbindungsbereich (24) angrenzenden Expansionsbereich (26) expandiert, sodass das thermisch expandierte Material (17) den Zwischenraum (16) zwischen dem ersten Werkstück (10) und dem zweiten Werkstück (11) im Expansionsbereich (26) im Wesentlichen vollständig ausfüllt,
**dadurch gekennzeichnet, dass**
das thermisch expandierbare Material (17) ein thermisch aufschäumbares Material ist, wobei das thermisch aufschäumbare Material in dem Expansionsbereich (26) aufgeschäumt wird, und wobei das thermisch expandierbare Material ein Treibmittel aufweist, das, wenn das thermisch expandierbare Material erhitzt wird, ein Gas freisetzt, welches dafür sorgt, dass das thermisch expandierbare Material aufschäumt.

2. Verfahren (200) nach Anspruch 1, **dadurch gekennzeichnet, dass** das erste Werkstück (10) und/oder das zweite Werkstück (11) ein metallisches Material, insbesondere Stahl, umfassen, und/oder dass das erste Werkstück (10) und/oder das zweite Werkstück (11) aus einem metallischen Material, insbesondere Stahl, bestehen.

3. Verfahren (200) nach Anspruch 1 oder 2, **dadurch gekennzeichnet, dass** die Verbindung eine Schweißverbindung ist, und/oder dass in dem Verbindungsbereich (24) eine Schweißnaht und/oder ein Schweißpunkt (25) ausgebildet wird, und/oder dass das Verbindungsverfahren ein Schweißverfahren ist, wobei das Schweißverfahren bevorzugt ein Widerstandspunktschweißverfahren und/oder ein Metallschutzgasschweißverfahren und/oder ein Laserschweißverfahren und/oder ein Metallschutzgaslochschweißverfahren ist.

4. Verfahren (200) nach einem der vorgenannten Ansprüche, **dadurch gekennzeichnet, dass** das thermisch expandierbare Material (17) ein elektrisch leitfähiges Material und/oder ein thermisch leitfähiges Material ist, und/oder dass das thermisch expandierbare Material (17) ein aufschäumbarer Kunststoff und/oder ein aufschäumbares Metall, insbesondere ein Metallschaum, weiter insbesondere ein Zinkschaum oder ein Aluminiumschaum, ist.

5. Verfahren (200) nach einem der vorgenannten Ansprüche, **dadurch gekennzeichnet, dass** das aufgeschmolzene thermisch expandierbare Material (17) aus dem Verbindungsbereich (24), bevorzugt durch Beaufschlagung des ersten Werkstücks (10) und/oder des zweite Werkstücks (11) mit einer Druckkraft, verdrängt wird, sodass das erste Werkstück (10) und das zweite Werkstück (11) in einen physischen Kontakt kommen und eine stoffschlüssige und/oder formschlüssige Verbindung zwischen dem ersten Werkstück (10) und dem zweiten Werkstück (11) hergestellt wird.

6. Verfahren (200) nach einem der vorgenannten Ansprüche, **dadurch gekennzeichnet, dass** das erste Werkstück (10) ein Hohlprofil (12) ist und/oder dass das zweite Werkstück (11) ein Knotenelement (13) ist, wobei das Hohlprofil (12) auf einen Aufnahmezapfen (14) des Knotenelements (13) aufgesteckt wird.

7. Verfahren (200) nach einem der vorgenannten Ansprüche, **dadurch gekennzeichnet, dass** das thermisch expandierbare Material (17) ein Materialplättchen (18) ist.

8. Verfahren (200) nach einem der vorgenannten Ansprüche, **dadurch gekennzeichnet, dass** das thermisch expandierbare Material (17) auf das erste Werkstück (10) und/oder das zweite Werkstück (11) aufgebracht, insbesondere gelegt und/oder geklebt und/oder gespritzt, wird, und/oder dass das thermisch expandierbare Material (17) in den Zwischenraum (16) zwischen dem ersten Werkstück (10) und dem zweiten Werkstück (11) eingebracht, insbesondere eingelegt und/oder eingeklebt und/oder eingespritzt, wird.

9. Verwendung eines thermisch expandierbaren Materials (17), nämlich eines thermisch aufschäumbaren Materials, in einem Verfahren (200) zum Fügen von Werkstücken (10, 11) nach einem der vorgenannten Ansprüche.

10. Bauteil (100) umfassend ein erstes Werkstück (10) und ein zweites Werkstück (11) und ein thermisch expandiertes Material (17), erhältlich durch ein Verfahren (200) zum Fügen von Werkstücken (10, 11) nach einem der Ansprüche 1 bis 8.

## Claims

1. A method (200) for the joining of workpieces (10, 11), wherein a thermally expandable material (17) is arranged in an intermediate space (16) between a first workpiece (10) and a second workpiece (11), wherein, to produce a connection between the first workpiece (10) and the second workpiece (11) in a connecting region (24), thermal energy is introduced into the connecting region (24) in a connecting process, wherein
the thermally expandable material (17) melts in the connecting region (24), with the result that a connection between the first workpiece (10) and the second workpiece (11) is produced in the connecting region (24), and that the thermally expandable material (17) expands in an expansion region (26) adjoining the connecting region (24), with the result that the thermally expanded material (17) substantially completely fills the intermediate space (16) between the first workpiece (10) and the second workpiece (11) in the expansion region (26),
**characterized in that**
the thermally expandable material (17) is a thermally foamable material, wherein the thermally foamable material is foamed in the expansion region (26), and wherein the thermally expandable material comprises a blowing agent which, when the thermally expandable material is heated, releases a gas which ensures that the thermally expandable material foams.

2. The method (200) according to Claim 1, **characterized in that** the first workpiece (10) and/or the second workpiece (11) comprise a metallic material, in particular steel, and/or **in that** the first workpiece (10) and/or the second workpiece (11) consist of a metallic material, in particular steel.

3. The method (200) according to Claim 1 or 2, **characterized in that** the connection is a welded connection, and/or **in that** a weld seam and/or a weld point (25) is formed in the connecting region (24), and/or **in that** the connecting process is a welding process, wherein the welding process is preferably a resistance spot welding process and/or a gas-shielded metal-arc welding process and/or a laser welding process and/or a gas-shielded metal-arc plug welding process.

4. The method (200) according to one of the preceding claims, **characterized in that** the thermally expandable material (17) is an electrically conductive material and/or a thermally conductive material, and/or **in that** the thermally expandable material (17) is a foamable plastic and/or a foamable metal, in particular a metal foam, more particularly a zinc foam or an aluminium foam.

5. The method (200) according to one of the preceding claims, **characterized in that** the molten thermally expandable material (17) is displaced out of the connecting region (24), preferably by application of a compressive force to the first workpiece (10) and/or the second workpiece (11), such that the first workpiece (10) and the second workpiece (11) come into physical contact and a materially bonded and/or form-fitting connection is produced between the first workpiece (10) and the second workpiece (11).

6. The method (200) according to one of the preceding claims, **characterized in that** the first workpiece (10) is a hollow profile (12) and/or **in that** the second workpiece (11) is a node element (13), wherein the hollow profile (12) is plugged onto a receiving pin (14) of the node element (13).

7. The method (200) according to one of the preceding claims, **characterized in that** the thermally expandable material (17) is a material lamella (18).

8. The method (200) according to one of the preceding claims, **characterized in that** the thermally expandable material (17) is applied to, in particular placed and/or bonded and/or injected onto, the first workpiece (10) and/or the second workpiece (11), and/or **in that** the thermally expandable material (17) is introduced, in particular deposited and/or bonded and/or injected, into the intermediate space (16) between the first workpiece (10) and the second workpiece (11).

9. The use of a thermally expandable material (17), namely a thermally foamable material, in a method (200) for the joining of workpieces (10, 11) according to one of the preceding claims.

10. A component (100) comprising a first workpiece (10) and a second workpiece (11) and a thermally expanded material (17), obtainable by a method (200) for the joining of workpieces (10, 11) according to one of Claims 1 to 8.

## Revendications

1. Procédé (200) d'assemblage de pièces (10, 11), un matériau thermo-expansible (17) étant disposé dans un espace intermédiaire (16) ménagé entre une première pièce (10) et une deuxième pièce (11), de l'énergie thermique étant amenée dans la zone de liaison (24) selon un procédé de liaison afin de réaliser une liaison entre la première pièce (10) et la deuxième pièce (11) dans une zone de liaison (24),
le matériau thermo-expansible (17) fondant dans la zone de liaison (24) de façon à réaliser une liaison de la première pièce (10) et de la deuxième pièce (11) dans la zone de liaison (24), et que le matériau thermo-expansible (17) subit une expansion dans une zone d'expansion (26) adjacente à la zone de liaison (24), de sorte que le matériau thermiquement expansé (17) remplisse sensiblement complètement l'espace (16) ménagé entre la première pièce (10) et la deuxième pièce (11) dans la zone d'expansion (26),
**caractérisé en ce que**
le matériau thermo-expansible (17) est un matériau thermo-moussant, le matériau thermo-moussant subissant un moussage dans la zone d'expansion (26), et le matériau thermo-expansible comprenant un agent gonflant qui, lorsque le matériau thermo-expansible est chauffé, libère un gaz qui fait mousser le matériau thermo-expansible.

2. Procédé (200) selon la revendication 1, **caractérisé en ce que** la première pièce (10) et/ou la deuxième pièce (11) comprennent un matériau métallique, notamment de l'acier, et/ou **en ce que** la première pièce (10) et/ou la deuxième pièce (11) est en un matériau métallique, notamment en acier.

3. Procédé (200) selon la revendication 1 ou 2, **caractérisé en ce que** la liaison est une liaison soudée et/ou **en ce qu'**un cordon de soudure et/ou un point de soudure (25) est formé dans la zone de liaison (24) et/ou **en ce que** le procédé de liaison est un procédé de soudage, le procédé de soudage étant de préférence un procédé de soudage par résistance par points et/ou un procédé de soudage sous gaz anticorrosif et/ou un procédé de soudage au laser et/ou un procédé de soudage en bouchon sous gaz anticorrosif.

4. Procédé (200) selon l'une des revendications précédentes, **caractérisé en ce que** le matériau thermo-expansible (17) est un matériau électriquement conducteur et/ou un matériau thermoconducteur, et/ou **en ce que** le matériau thermo-expansible (17) est une matière synthétique apte au moussage et/ou un métal apte au moussage, en particulier une mousse métallique, plus particulièrement une mousse de zinc ou une mousse d'aluminium.

5. Procédé (200) selon l'une des revendications précédentes, **caractérisé en ce que** le matériau thermo-expansible (17) en fusion est déplacé de la zone de liaison (24) avec une force de compression, de préférence par action sur la première pièce (10) et/ou la deuxième pièce (11), de sorte que la première pièce (10) et la deuxième pièce (11) entrent en contact physique et qu'une liaison de matière et/ou par complémentarité de formes soit réalisée entre la première pièce (10) et la deuxième pièce (11).

6. Procédé (200) selon l'une des revendications précédentes, **caractérisé en ce que** la première pièce (10) est un profilé creux (12) et/ou **en ce que** la deuxième pièce (11) est un élément nodal (13), le profilé creux (12) étant placé sur une broche de réception (14) de l'élément nodal (13).

7. Procédé (200) selon l'une des revendications précédentes, **caractérisé en ce que** le matériau thermo-expansible (17) est une plaque de matériau (18).

8. Procédé (200) selon l'une des revendications précédentes, **caractérisé en ce que** le matériau thermo-expansible (17) est appliqué, notamment posé et/ou collé et/ou pulvérisé, sur la première pièce (10) et/ou la deuxième pièce (11) et/ou **en ce que** le matériau thermo-expansible (17) est introduit, notamment inséré et/ou collé et/ou injecté, dans l'espace intermédiaire (16) ménagé entre la première pièce (10) et la deuxième pièce (11).

9. Utilisation d'un matériau thermo-expansible (17), à savoir un matériau apte au thermo-moussage, dans un procédé (200) d'assemblage de pièces (10, 11) selon l'une des revendications précédentes.

10. Composant (100) comprenant une première pièce (10) et une deuxième pièce (11) et un matériau expansé thermiquement (17), ledit composant pouvant être obtenu par un procédé (200) d'assemblage de pièces (10, 11) selon l'une des revendications 1 à 8.
